(19) Europäisches Patentamt
European Patent Office
Office européen des brevets

(11) **EP 3 462 225 B1**

(12) **EUROPÄISCHE PATENTSCHRIFT**

(45) Veröffentlichungstag und Bekanntmachung des Hinweises auf die Patenterteilung:
**02.11.2022  Patentblatt 2022/44**

(21) Anmeldenummer: **18197503.8**

(22) Anmeldetag: **28.09.2018**

(51) Internationale Patentklassifikation (IPC):
**G02B 21/33** $^{(2006.01)}$    **G02B 21/36** $^{(2006.01)}$

(52) Gemeinsame Patentklassifikation (CPC):
**G02B 21/33; G02B 21/365**

(54) **IMMERSIONSVORRICHTUNG ZUR DYNAMISCHEN ANPASSUNG EINES MEDIUMS AN EINE PROBE**

IMMERSION DEVICE FOR DYNAMIC ADAPTATION OF A MEDIUM TO A SAMPLE

DISPOSITIF D'IMMERSION DESTINÉ À L'ADAPTATION DYNAMIQUE D'UN MILIEU À UN ÉCHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2017   DE 102017217380**

(43) Veröffentlichungstag der Anmeldung:
**03.04.2019   Patentblatt 2019/14**

(73) Patentinhaber: **Carl Zeiss Microscopy GmbH 07745 Jena (DE)**

(72) Erfinder:
• **KALKBRENNER, Thomas
07745 Jena (DE)**
• **BORCK, Sebastian
07749 Jena (DE)**
• **SIEBENMORGEN, Jörg
07743 Jena (DE)**

(74) Vertreter: **Loritz, Rainer
Carl Zeiss AG
Konzernfunktion Recht und Patente
Patentabteilung Jena
Carl-Zeiss-Promenade 10
07745 Jena (DE)**

(56) Entgegenhaltungen:
WO-A1-2006/125538     DE-A1-102015 221 044
US-A1- 2005 190 436     US-A1- 2008 117 392

**Beschreibung**

Die Erfindung betrifft eine Anordnung sowie ein Verfahren zur Einstellung der optischen Eigenschaften eines Mediums, insbesondere eines Immersionsmediums, sowie ein Mikroskop mit einer solchen Anordnung.

Insbesondere in der Lebendzell-Mikroskopie ist der genaue Brechungsindex der Probe meist unbekannt. Das betrifft nicht (nur) das Einbettmedium und/oder den verwendeten Puffer, sondern vor allem das Innere der Probe, die beispielsweise durch Zellen, (Tumor-)Spheroide, Gewebeschnitte oder ganze Organismen gegeben sein kann.

Da diese Proben üblicherweise in wässrigen Lösungen (Pufferlösungen) aufbewahrt und untersucht werden, werden - auch historisch bedingt - meistens Wasserimmersionsobjektive eingesetzt. Diese sind für einen Brechungsindex von n = 1,33 (Brechungsindex von Wasser) optimiert. Der Brechungsindex von Lebendzell-Proben weicht jedoch von n = 1,33 ab (siehe z.B. Liu, P. Y., et al. "Cell refractive index for cell biology and disease diagnosis: past, present and future." Lab on a Chip 16.4 (2016): 634-644).

So liegt z.B. der Brechungsindex des Cytosols typischer Zellen im Bereich von 1,36 - 1,39 und weicht damit deutlich vom Brechungsindex des Wassers ab. Eine daraus resultierende Fehlanpassung optischer Anordnungen führt zu Aberrationen, die die optische Leistung des Mikroskops einschränken. Ein Ausgleich dieser Aberrationen ist - wenn überhaupt möglich - aufwändig und teuer und kann beispielsweise mittels adaptiver Optiken, z. B. deformierbarer Spiegel, erfolgen.

Dies gilt insbesondere für Lichtblatt-Systeme, die wenigstens eine optische Achse aufweisen, welche nicht senkrecht zu einem Deckglas steht. Das Deckglas, das bei inverser Mikroskopie auch durch den Boden einer Probenhalterung, beispielsweise einer Petrischale, eine (Mikro-)Titerplatte oder einer transparenten Platte gebildet sein kann, wird von einer zu erfassenden Detektionsstrahlung unter einem Winkel ungleich 90°, also schräg, durchlaufen.

Bei auftretenden Fehlern in der Anpassung des Brechungsindex kommt es oftmals zu unsymmetrischen Aberrationen wie Astigmatismus, Koma. Diese sind noch weniger tolerierbar als symmetrische Aberrationen, die bei konventionellen Anordnungen mit Auflicht auftreten können und vor allem als sphärische Aberrationen in Erscheinung treten. Solche symmetrischen Fehler sind zwar zunächst durch den Anwender leichter tolerierbar, führen aber letztendlich dennoch zu einer deutlichen Einschränkung z. B. der optischen Eindringtiefe des Mikroskops.

Zur Reduzierung von Aberrationen, die bei einer Passage einer Beleuchtungsstrahlung und/oder einer Detektionsstrahlung durch eine Probe bedingt sind, können geeignete Immersionsmedien verwendet werden.

Gängige Immersionsmedien sind beispielsweise Wasser, Silikonöl und Immersionsöle, die zusammen mit einem entsprechend ausgebildeten Immersionsobjektiv verwendet werden. In der Mikroskopie bietet der Einsatz von Immersionsobjektiven zahlreiche Vorteile, die sich alle letztendlich aus den höheren erzielbaren numerischen Aperturen der Objektive ergeben. Diese Vorteile sind zum Beispiel eine höhere räumliche Auflösung, eine höhere Lichtsammeleffizienz, ein verbessertes Signal-Rausch- bzw. Signal-Hintergrund-Verhältnis, kürzere Belichtungszeiten und bessere zeitliche Auflösung sowie eine reduzierte Phototoxizität.

Da die Proben unterschiedlich eingebettet und fixiert sein können, gibt es verschiedene Klassen von Immersionsmedien, um möglichst nahe am refraktiven Index der Probe zu arbeiten. Typische Immersionsmedien sind Wasser, organische Ersatzmedien für Wasser (z. B. ZEISS Immersol W), Glycerin (z. B. ZEISS Immersol G) und spezielle Immersionsöle (z. B. ZEISS Immersol F, Immersol HI). Alle diese Immersionsmedien sind bei gebräuchlicher Temperatur flüssig. Nur wenn das Immersionsmedium exakt die gleichen optischen Parameter der Probe besitzt, wird eine optimale Bildqualität, maximale Signalintensität und Eindringtiefe erreicht (vgl. Hell, S., et al. (1993): Aberrations in confocal fluorescence microscopy induced by mismatches in refractive index. Journal of microscopy, 169: 391-405).

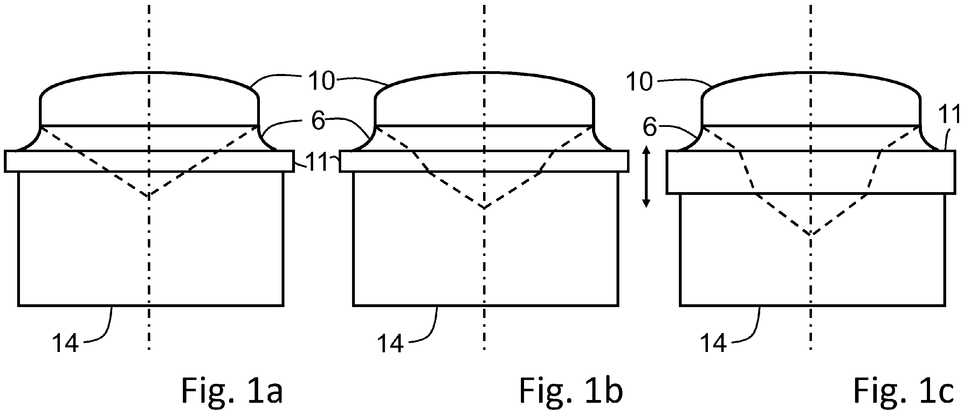

Grundsätzlich kann die numerische Apertur durch Verwendung von Immersionsmedien mit möglichst hohem Brechungsindex maximiert werden, wobei eine sinnvolle Obergrenze durch den Brechungsindex des Deckglases gegeben ist. Bei perfekt angepasstem Brechungsindex ($n_{Immersion} = n_{Deckglas}$) ist das Deckglas optisch nicht mehr wirksam. Eine solche Situation, die typischerweise bei Ölimmersionsobjektiven erreicht wird, ist schematisch in Fig. 1a dargestellt.

Dargestellt ist eine Probe 14, ein Probenhalter 11 in Form eines Deckglases und ein Objektiv 10 sowie ein Immersionsmedium 6 zwischen Probenhalter 11 und Objektiv 10. Der Verlauf fokussierter Beleuchtungsstrahlung ist vereinfacht als unterbrochene Volllinie gezeigt.

Bei biologischen Proben tritt oft der Fall auf, dass der Brechungsindex des Probenmediums von dem des Deckglases 11 und der Immersion abweicht. In dieser Situation kann mit Ölimmersionsobjektiven nur relativ nahe an der Deckglasoberfläche optimal gearbeitet werden. Grund hierfür ist, dass durch den Brechungsindexsprung Aberrationen, insbesondere sphärische Aberrationen, auftreten, die umso stärker werden, je weiter man in die Probe 14 eindringt. Für die Mikroskopie insbesondere an lebenden Zellen sind daher Wasserimmersionsobjektive besser geeignet (Fig. 1b und 1c). Da sich die Zellen in wässriger Umgebung befinden, sind die Brechungsindizes von Immersionsflüssigkeit und Probenmedium sehr ähnlich, lediglich das Deckglas 11 selbst weicht ab. Wenn das Objektiv optisch auskorrigiert ist, treten keine sphärischen Aberrationen beim tieferen Eindringen in die Probe 14 auf (Fig. 1c). Allerdings funktioniert diese Korrektur nur für eine bekannte und bestimmte Deckglasdicke und Glassorte. Deshalb besitzen Wasserimmersionsobjektive meist eine Korrekturfunktion, bei der durch Verschieben einer Linse oder Linsengruppe im Objektiv 10 (Korrektur-Ring, "Korr-Ring") unvermeidbare Deckglasdickenschwankungen korrigiert werden können, wie diese durch den Doppelpfeil angedeutet ist (Fig. 1b und 1c).

DE 10 2015 221044 A1 beschreibt ein Immersionsmikroskop mit einer Medienzuführungeinheit, die automatisiert ein angepasstes Immersionsmedium zuführt.

US 2008/0117392 A1 beschreibt eine Medienzuführungseinheit mit einer Mischvorrichtung für eine Lithographievorrichtung.

Die Erfindung soll das Problem der Einschränkung der mikroskopischen Abbildung mit Immersionsobjektiven durch Fehlanpassung zwischen Brechungsindex des Immersionsmediums und Brechungsindex der Probe, insbesondere für die Lebendzell-Mikroskopie lösen.

Die Aufgabe wird hinsichtlich einer Anordnung durch die Gegenstände des Anspruchs 1 und hinsichtlich eines Verfahrens durch die Gegenstände des Anspruchs 4 gelöst. Vorteilhafte Weiterbildungen sind in den abhängigen Ansprüchen angegeben.

Die Anordnung zur Zuführung von als Immersionsmedien dienenden Medien umfasst eine Medienzuführeinheit zum gesteuerten Zuführen eines Mediums oder eines Gemisches in einen Kontaktbereich zwischen einer optischen Linse und einer in einem Objektraum angeordneten oder anordenbaren Probe als ein zu beobachtendes Objekt. Insbesondere ist der Kontaktbereich zwischen einer optischen Linse und einem Probenträger ausgebildet, auf dem in dem Objektraum die Probe angeordnet oder anordenbar ist. Weiterhin ist eine Bilderfassungseinheit zur Erfassung von Bilddaten anhand von aus dem Objektraum entlang eines durch den Kontaktbereich verlaufenden Detektionsstrahlengangs erhaltener Detektionsstrahlung vorhanden.

Erfindungsgemäß weist die Anordnung eine Auswerteeinheit auf, die konfiguriert ist, um anhand erfasster Bilddaten aktuelle Bildparameter zu ermitteln und diese mit Soll-Bildparametern zu vergleichen. In Abhängigkeit des Ergebnisses des Vergleichs wird ein erwünschtes Mischungsverhältnis wenigstens zweier Komponenten des Mediums ermittelt. Es ist eine Mischvorrichtung zur gesteuerten Einstellung des Mischungsverhältnisses der Komponenten des in den Kontaktbereich einzubringenden Mediums vorhanden. Außerdem ist eine Steuereinheit vorhanden, die zur Ansteuerung der Medienmischvorrichtung in Abhängigkeit des ermittelten erwünschten Mischungsverhältnisses ausgebildet ist.

Vorzugsweise ist die Auswerteeinheit mit einer Feedback-Schleife versehen, sodass die Wirkungen aktuell vorgenommener Änderungen der Mischungsverhältnisse erfasst, kontrolliert und erforderlichenfalls korrigiert werden können. Zur Erfassung eines aktuell eingestellten Mischungsverhältnisses der Komponenten können Sensoren vorhanden sein. Beispielsweise kann eine Überwachung des Mischungsverhältnisses mit einem Refraktometer erfolgen.

Das Medium, das als Immersionsmedium dienen soll, muss zwei miteinander mischbare Komponenten enthalten. Die Komponenten müssen mindestens über einen Bereich ihrer Anteile miteinander mischbar sein. Um eine gute Mischbarkeit und Förderfähigkeit zu gewährleisten sollten die Komponenten nicht hochviskos sein. In besonderen Fällen können Mischungsverhältnisse einstellbar sein, bei denen eine der Komponenten mit einem Anteil von Null in dem Medium enthalten ist.

Die Erfindung betrifft daher eine steuerbare und optional dynamische Mischung mindestens zweier geeigneter Komponenten $K_1$ und $K_2$, deren Brechungsindizes unterschiedlich sind. Die Brechungsindizes werden im Folgenden mit $n_1$, $n_2$, ...$n_i$ für eine erste Komponente $K_1$, eine zweite Komponente $K_2$, ..., eine i-te Komponente $K_i$ des Mediums bezeichnet. Die Mischungsverhältnisse der Komponenten des Mediums werden an aktuelle Erfordernisse des verwendeten Mikroskopierverfahrens und/oder an sich ändernde Umgebungsbedingungen angepasst. Es ist also eine Möglichkeit vorgeschlagen, den Brechungsindex eines Elements beispielsweise einer Mikroskopieranordnung kontinuierlich an aktuelle und/oder sich ändernde Bedingungen anzupassen.

Idealerweise schließen $n_1$ und $n_i$ den möglichen Bereich des Brechungsindex für die Anwendung des Mikroskopsystems ein oder grenzen einen Unterbereich ab. Beispiele sind z. B. $n_1 = 1,33$ und $n_i = 1,4$ für Lebendzell-Mikroskopie; $n_1 = 1,33$ und $n_i = 1,52$ für Lebendzell Mikroskopie und fixierte Zellen, $n_1 = 1,36$ und $n_i = 1,42$ für Lebendzell Mikroskopie und fixierte Zellen bei Verwendung von Einbettmedien die für Glycerol-Immersion geeignet sind. Der Bereich des Brechungsindex kann auch $n_i = 1,52$ bis $1,56$ betragen, wie diese beispielsweise bei einigen Entfärbungsmitteln (engl.: clearing solution) vorliegen. Durch Mischen der beiden Komponenten in einem geeigneten Volumenverhältnis lässt sich ein resultierender Brechungsindex $n_{res}$ zwischen diesen Eckwerten einstellen. Dabei ist zu beachten, dass das direkte Verhältnis der Volumenfraktionen

$$n_{res} = (n_1 * V_1 + n_2 * V_2)/(V_1 + V_2)$$

nur näherungsweise den Brechungsindex $n_{res}$ einer binären Mischung ergibt. Bessere Werte ergeben sich z. B. über die Lorentz-Lorenz Gleichung oder die Gladstone-Dale Gleichung, die noch die Dichte der Flüssigkeiten berücksichtigt (Referenzen in: Herraez, J.V. and Belda, R. (2006): Refractive indices, densities and excess molar volumes of monoalcohols+ water. Journal of solution chemistry 35: 1315-1328).

Beispiele für geeignete Komponenten und Medien sind Wasser-Alkohol-Gemische und verschiedene Alkohole (siehe ebenfalls: Herraez, J.V. and Belda, R.).

Bei definiertem Einsatzbereich und bekannten Eigenschaften der Komponenten $K_1$ und $K_2$ lässt sich der Brechungsindex der jeweiligen Mischungen aber auch einmalig empirisch bestimmen und als Tabelle ablegen. Da der aktuelle Brechungsindex der zu untersuchenden Probe, also beispielsweise das Innere einer lebenden Zelle eines bestimmten Typs, aber nicht vorab bekannt ist, soll mit einer solchen Mischung zunächst nur ein plausibler Startwert vorgegeben werden. Durch leichte Variation des Mischungsverhältnisses wird eine möglichst optimierte Anpassung der Brechungsindizes erreicht und auftretende Aberrationen weitestgehend reduziert.

Die Mischvorrichtung kann eine Pumpe, Leitungen, Vorratsbehälter für die zu mischenden Komponenten des Mediums sowie optional Mischstrecken oder Mischräume umfassen.

Das Mischen der Komponenten kann extern in einem Mischraum erfolgen. Das Medium wird dann aktiv aus dem Mischraum zum Kontaktbereich befördert oder fließt aufgrund der Schwerkraft dorthin (passiv).

In weiteren Ausführungen erfolgt das Mischen der Komponenten in einer Mischstrecke auf dem Weg zwischen Vorratsbehälter und Kontaktbereich. Es ist auch möglich, die beiden Komponenten direkt im Kontaktbereich zu mischen, was besonders dann von Vorteil ist, wenn kostenintensive Komponenten verwendet werden.

Die Komponenten können passiv mithilfe turbulenter Strömung gemischt werden. Dazu können in Medienzuleitungen Turbulatoren vorhanden sein, durch die eine laminare Strömung zumindest lokal vermieden oder aufgelöst und in turbulente Strömung überführt wird. Weiterhin kann der sogenannte Dean-Effekt in Dean-Flow-Mischern ausgenutzt werden.

Es können auch Mikrofluidik-Elemente eingesetzt werden. Deren Vorteile kommen zum Tragen, wenn nur geringe Flüssigkeitsvolumina zum Einsatz kommen sollen oder der Kontaktbereich sehr klein ist und/oder kostenintensives Medium verwendet wird und ungenutztes Volumen in Zuleitungen minimiert werden soll. Wird eine schnelle Veränderung des Brechungsindex des Mediums angestrebt, ist ebenfalls der Einsatz von Mikrofluidik-Elementen möglich.

Ein aktives Mischen kann beispielsweise mithilfe von Rührsystemen, Magnetrührern, kombinierten Misch-Pump-Systemen und/oder Sägezahn-Dispergierern erfolgen.

Für die effiziente Verwendung der erfindungsgemäßen Vorrichtung und einer ebenfalls effektiven und präzisen Ausführung des weiter unten beschriebenen Verfahrens ist insbesondere für die Anpassung des Brechungsindex der Immersion als Funktion von Bildgüteparametern auch die Abführung des Mediums von Bedeutung.

Um eine effektive Zuführung und/oder Abführung des Mediums in beziehungsweise aus dem Kontaktbereich zu erreichen, kann die Anordnung eine optische Linse umfassen, die mindestens einen an dem Kontaktbereich mündenden Kanal aufweist. Der Kanal verläuft dabei durch die optische Linse.

Die optische Linse besitzt eine erste Linsenfläche und eine zweite Linsenfläche, wobei die erste Linsenfläche der zu beobachtenden Probe zugewandt und die zweite Linsenfläche der zu beobachtenden Probe abgewandt ist. Der eine Kanal beziehungsweise mindestens einer der vorhandenen Kanäle können in einer weiteren Ausführung der optischen Linse außerhalb eines in vertikaler Ausrichtung befindlichen höchsten Punkts der ersten Linsenfläche münden.

Von Vorteil ist eine solche optische Linse, wenn der Kontaktbereich ein relativ kleines und nahezu abgeschlossenes Volumen darstellt, welches schnell mit neuem Medium durchströmt werden kann. In dieser konkreten Anordnung ist auch eine Pumpe in einer Abführung denkbar, die neues Medium, beispielsweise aus einem Mischraum, nachsaugt.

Die erfindungsgemäße Anordnung kann in allen Mikroskopen verwendet werden, bei denen für die Bilderfassung Immersionsmedien verwendet werden. Von besonderem Vorteil ist die Anordnung für die Laserscanningmikroskopie und Lichtblattmikroskopie, insbesondere wenn der Beleuchtungsstrahlengang und/oder der Detektionsstrahlengang schräg durch das Deckglas gerichtet ist beziehungsweise gerichtet sind.

Die Aufgabe wird ebenfalls durch ein Verfahren zur Einstellung optischer Parameter eines als Immersionsmedium fungierenden Mediums gelöst. Das Verfahren umfasst die Schritte des Erfassens von Bilddaten einer in einem Objektraum angeordneten Probe entlang eines Detektionsstrahlengangs, wobei der Detektionsstrahlengang über einen Abschnitts seiner Länge das in einem Kontaktbereich zwischen einer optischen Linse und einem Probenträger, beispielsweise einem Deckglas, befindliche Medium durchläuft und den Schritt des Auswertens der erfassten Bilddaten und des Ermittelns aktueller Bildparameter.

Die ermittelten aktuellen Bildparameter werden mit Soll-Bildparametern verglichen. In Abhängigkeit des Vergleichs wird ein erwünschtes Mischungsverhältnis wenigstens zweier Komponenten des Mediums ermittelt. Anschließend werden Steuerbefehle generiert und mittels der Steuerbefehle eine Medienmischvorrichtung zur Erzeugung des erwünschten Mischungsverhältnisses in einem Kontaktbereich und/oder zur Erzeugung des erwünschten Mischungsverhältnisses und Zuführen des Mediums in den Kontaktbereich angesteuert.

Aus dem erwünschten Mischungsverhältnis, dem so eingestellten resultierenden Brechungsindex des Mediums und dem bekannten Brechungsindex der Probenhalterung, lässt sich als zusätzliche Information der Brechungsindex der Probe ableiten.

Ein Soll-Bildparameter kann ein Wert, gegebenenfalls mit Angabe einer zulässigen Toleranz, sein. Es ist auch möglich, dass als Soll-Bildparameter kein absoluter Wert oder Wertebereich gewählt wird, sondern beispielsweise eine iterative Anpassung der aktuellen Bildparameter erfolgt. Dazu kann die Güte eines Bildparameters durch eine Maßzahl repräsentiert werden. Eine Maßzahl eines ermittelten aktuellen Bildparameters wird mit wenigstens einer Maßzahl eines zuvor ermittelten aktuellen Bildparameters verglichen. Repräsentiert beispielsweise eine große Maßzahl eine hohe Güte des Bildparameters, kann beispielsweise das Mischungsverhältnis des Mediums solange weiter in einer Richtung verändert werden, bis die Maßzahl nach dem Überschreiten eines Maximums der Maßzahl wieder abfällt. Das Mischungsverhältnis wird so gewählt, dass das ermittelte Maximum eingestellt ist.

Das Verfahren umfasst die Ermittlung eines Mischungsverhältnisses, durch dessen Wirkung im Ergebnis eine gewünschte Bildqualität erzielt wird, auch wenn dazu keine optimierte Anpassung der Brechungsindizes von Medium und Objekt erfolgt.

In einer möglichen Ausgestaltung des Verfahrens wird das Mischungsverhältnis so eingestellt, dass ein, vorzugsweiser aktueller, Brechungsindex des Mediums an einen Brechungsindex des Objekts angepasst wird.

Der resultierende Brechungsindex $n_{res}$ des Mediums wird vorzugsweise aus einem Bereich von $n_{res}$ = 1,36 - 1,42, insbesondere aus einem Bereich von $n_{res}$ = 1,36 - 1,40, ausgewählt, um eine optimierte Anpassung der Brechungsindizes von Deckglas, Probenmedium und Medium zu erzielen.

Als Kriterium für die Ermittlung des erwünschten Mischungsverhältnisses können beispielsweise Bildgüteparameter wie die Bildschärfe, der Bildkontrast, ein Signal-Rausch-Verhältnis und/oder Signalintensitäten als Bildparameter verwendet werden. Wie oben erläutert, können Soll-Bildparameter festgelegte Werte oder Wertebereiche eines Bildparameters, beispielsweise der Bildschärfe oder Kontrast, sein. Ein Abgleich der ermittelten aktuellen Bildparameter mit den so definierten Soll-Bildparametern kann als eine Regelschleife oder Feedback-Regelung angesehen werden. Wird als Soll-Bildparameter ein Maximum einer Maßzahl des Bildparameters ermittelt, erfolgt dies iterativ.

Das Verfahren kann so ausgestaltet sein, dass ein erstes Mischungsverhältnis festgelegt ist oder anhand der zu beobachtenden Probe und dessen Probenmedium geschätzt wird. Nach dem Erfassen der Bilddaten und dem Ermitteln der aktuellen Bildparameter kann ein Vergleich mit dem erwarteten Soll-Bildparameter erfolgen. Je nachdem, in welcher Richtung die aktuellen Bildparameter von den Soll-Bildparametern abweichen kann ein als nächstes einzustellendes Mischungsverhältnis ermittelt, beispielsweise berechnet oder einer gespeicherten Tabelle entnommen werden. Ist die Erfassung und Auswertung der Bilddaten schnell genug, kann auch ein Gradient von Mischungsverhältnissen gefahren werden. Simultan dazu werden die aktuellen Bildparameter erfasst und ausgewertet. Gelangt das aktuell eingestellte Mischungsverhältnis in die Nähe des erwünschten Mischungsverhältnisses, kann die Änderung der Mischungsverhältnisse verlangsamt werden, um mit Erreichen des erwünschten Mischungsverhältnisses gestoppt zu werden.

In einer vorteilhaften Ausgestaltung der erfindungsgemäßen Anordnung sowie des erfindungsgemäßen Verfahrens werden die aus dem Vergleich von ermittelten aktuellen Bildparametern und Soll-Bildparametern ermittelten Daten beziehungsweise Ergebnisse zusätzlich oder alternativ zur Ansteuerung einer Korrekturfunktion verwendet, die im Detektionsstrahlengang, insbesondere in einem Objektiv, realisiert ist. Auf diese Weise können Aberrationen reduziert werden, die aufgrund der Dicke eines zwischen Objektiv und Probe vorhandenen Deckglases auftreten können.

Beispielsweise ist das Objektiv mittels einer Korrekturfunktion einstellbar. Die Daten des oben genannten Vergleichs werden in Steuerbefehle umgesetzt, durch die aktuelle optische Parameter des Objektivs entsprechend der Korrekturfunktion eingestellt werden. Beispielsweise können Korrekturelemente des Objektivs oder dem Objektiv nachgeordnete optische Elemente, z. B. Alvarezplatten, entsprechend der Steuerbefehle und der Korrekturfunktion eingestellt werden. So können Abbildungsfehler wie sphärische Aberrationen und/oder Differenzen der Brechungsindizes mittels einer Anpassung des resultierenden Brechungsindex $n_{res}$ reduziert werden, während Aberrationen aufgrund schwankender Deckglasdicken vornehmlich mittels der Korrekturfunktion des Objektivs vermindert werden.

Die Erfindung ermöglicht vorteilhaft eine deutliche Steigerung der Abbildungsqualität und/oder des Einsatzbereiches von Objektiven. So wird beispielsweise die Eindringtiefe bei gleichbleibender Abbildungsqualität erhöht.

Außerdem ist eine Lösung, bei der ein Brechungsindex $n_{res}$ des Mediums 6 dynamisch, intervallweise oder bei Bedarf angepasst wird, erheblich kostengünstiger als die Verwendung und Ansteuerung einer adaptiven Optik. Als positiver Zusatzeffekt können Informationen über den Brechungsindex der Probe erlangt werden, so dass die erfindungsgemäße Anordnung als ein Mikro-in-situ-Refraktometer für biologische Proben genutzt werden kann. Es ist auch möglich, den für eine bestimmte Probe und/oder für Messungen eingestellte und optimierte Brechungsindizes abzuspeichern. Auf diese Weise kann für spätere Messungen eine "Brechungsindex-Karte" erstellt werden.

Zusätzlich zum Brechungsindex ist für die Qualität der mikroskopischen Abbildung auch die Dispersion eines Immersionsmediums von Bedeutung, üblicherweise charakterisiert durch die Abbe-Zahl. Aus dem Stand der Technik ist bekannt, die Dispersion beziehungsweise die Abbe-Zahl eines Immersionsmediums vorrangig an das Deckglas anzupassen.

Die Erfindung ermöglicht es, zusätzlich zu dem Brechungsindex auch Dispersionseigenschaften des Immersionsmediums einzustellen. Beispielsweise können die zu mischenden Komponenten K$_1$, K$_2$ durch weitere Komponenten K$_i$ ergänzt werden, welche bei zueinander gleichem oder ähnlichem Brechungsindex unterschiedliche Abbezahlen aufweisen. Eine solche Ausgestaltung der Erfindung erlaubt es vorteilhaft auch die Dispersion des Immersionsmediums bei unterschiedlichen genutzten Wellenlängen zu optimieren. Diese Ausgestaltung ist beispielsweise dann vorteilhaft, wenn Messungen bei unterschiedlichen Wellenlängen vorgenommen werden sollen.

Die Erfindung wird nachfolgend anhand von Ausführungsbeispielen und Abbildungen näher erläutert. Dabei zeigen:

Fig. 1a    eine schematische Darstellung des Standes der Technik eines Objektivs in Form eines Immersionsobjektivs, eines Deckglases und einer Probe, wobei sich zwischen Objektiv und Deckglas ein Medium in Form eines Immersionsmediums befindet, wobei die Brechungsindizes optimal aufeinander abgestimmt sind;

Fig. 1b    eine schematische Darstellung des Standes der Technik eines Objektivs in Form eines Immersionsobjektivs, eines Deckglases und einer Probe, wobei sich zwischen Objektiv und Deckglas ein Medium in Form eines Immersionsmediums befindet, wobei durch das Deckglas Aberrationen verursacht sind;

Fig. 1c    eine schematische Darstellung des Standes der Technik eines Objektivs in Form eines Immersionsobjektivs, eines Deckglases und einer Probe, wobei sich zwischen Objektiv und Deckglas ein Medium in Form eines Immersionsmediums befindet, wobei Aberrationen mittels einer Korrekturfunktion reduziert sind;

Fig. 2    eine schematische Darstellung eines ersten Ausführungsbeispiels einer erfindungsgemäßen Anordnung;

Fig. 3    eine schematische Darstellung eines zweiten Ausführungsbeispiels einer erfindungsgemäßen Anordnung in einer ersten Seitenansicht,

Fig. 4    eine schematische Darstellung des zweiten Ausführungsbeispiels der erfindungsgemäßen Anordnung in einer zweiten Seitenansicht, und

Fig. 5    eine schematische Darstellung eines Ablaufschemas einer Ausgestaltung des erfindungsgemäßen Verfahrens.

Die bereits zu den Fig. 1a bis 1c beschriebenen Elemente finden sich auch in den weiteren Ausführungsbeispielen. Dabei bezeichnen gleiche Bezugszeichen gleiche technische Elemente.

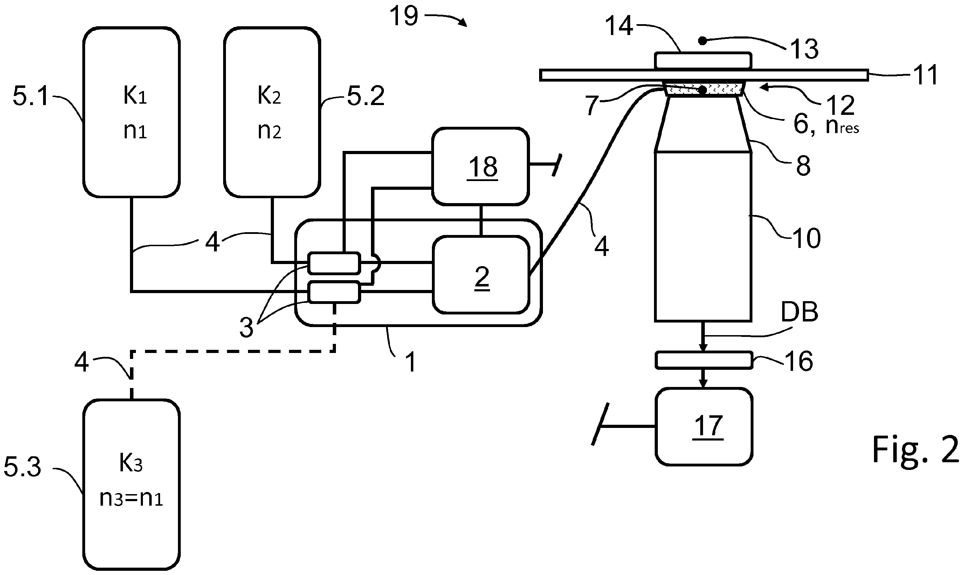

Eine erfindungsgemäße Anordnung umfasst als wesentliche technische Elemente eine Medienzuführeinheit 1, eine Mischvorrichtung 2, eine Bilderfassungseinheit 16, eine Auswerteeinheit 17 und eine Steuereinheit 18 (Fig. 2).

Die Medienzuführeinheit 1 umfasst eine Mischvorrichtung 2, in die mittels Pumpen 3 eine erste Komponente K$_1$ und eine zweite Komponente K$_2$ eines Mediums 6 gefördert werden können. Die Medienzuführeinheit 1 steht über Medienleitungen 4 mit einem ersten Vorratsbehälter 5.1 und einem zweiten Vorratsbehälter 5.2 in Verbindungen, wobei in dem ersten Vorratsbehälter 5.1 die erste Komponente K$_1$ und in dem zweiten Vorratsbehälter 5.2 die zweite Komponente K$_2$ bevorratet sind. Die erste Komponente K$_1$ besitzt einen Brechungsindex n$_1$ während die zweite Komponente K$_2$ einen Brechungsindex n$_2$ besitzt und die beiden Brechungsindizes n$_1$ und n$_2$ voneinander verschieden sind.

Außerdem ist optional ein dritter Vorratsbehälter 5.3 vorhanden, dessen optionale Verwendung durch eine mit unterbrochener Volllinie dargestellten Medienzuleitung 4 symbolisiert ist. In diesem dritten Vorratsbehälter 5.3 befindet sich eine dritte Komponente K$_3$, deren Brechungsindex n$_3$ gleich dem Brechungsindex n$_1$ der ersten Komponente K$_1$ ist. Die dritte Komponente K$_3$ weist jedoch ein anderes Dispersionsverhalten als die erste Komponente K$_1$ und die zweite Komponente K$_2$ auf. Eine gesteuerte Zumischung eines Anteils der dritten Komponente K$_3$ und eine entsprechende Reduzierung des Anteils der ersten Komponente K$_1$ erlaubt sowohl die Anpassung des resultierenden Brechungsindex n$_{res}$ des Mediums 6 als auch eine Anpassung des Dispersionsverhaltens des Mediums 6.

In weiteren Ausführungen der erfindungsgemäßen Anordnung können weitere Vorratsbehälter zur Bevorratung weiterer Komponenten K$_i$ vorhanden sein.

Die Pumpen 3 erhalten ihre jeweiligen Steuerbefehle von einer Steuereinheit 18, durch die auch die Mischvorrichtung 2 ansteuerbar ist. Die Mischvorrichtung 2 kann zum aktiven Mischen der Komponenten K$_1$ und K$_2$ ausgebildet sein und beispielsweise einen Sägezahnmischer beinhalten. Alternativ oder zusätzlich kann ein passives Mischen ermöglicht sein, indem beispielsweise eine Mischstrecke mit Turbulatoren oder ein Dean-Flow-Mischer Teil der Mischvorrichtung 2 ist.

Das fertig gemischte Medium 6 gelangt über eine weitere Medienleitung 4 in einen Kontaktbereich 7, der als ein Spalt 12 zwischen einer optischen Linse 8 eines Objektivs 10 und einem als Probenhalterung 11 dienenden Deckglas ausgebildet ist. Das Medium 6 füllt den Kontaktbereich 7 aufgrund von wirkenden Adhäsionskräften zwischen Medium 6 und den Oberflächen von optischer Linse 8 und Probenhalterung 11 aus.

Auf der Probenhalterung 11 ist in einem Objektraum 13 eine Probe 14 als ein zu beobachtendes Objekt angeordnet beziehungsweise kann dort angeordnet werden.

Das Objektiv 10 erfasst eine von dem Objektraum 13 kommende Detektionsstrahlung DB (detection beam) und lenkt diese auf die Bilderfassungseinheit 16, die beispielsweise als ein Detektor mit einem CCD-Chip oder einem CMOS-Chip ausgebildet ist.

Die derart erfassten Detektionssignale werden als Bilddaten an die Auswerteeinheit 17 ausgegeben. Die Auswerteeinheit 17 ist dazu konfiguriert, um anhand erfasster Bilddaten aktuelle Bildparameter zu ermitteln und diese mit Soll-Bildparametern zu vergleichen. Die Soll-Bildparameter können entweder festgelegte Werte oder Wertebereiche sein, oder die Soll-Bildparameter sind maximierte Bildgüteparameter. In Abhängigkeit des Ergebnisses des Vergleichs wird ein erwünschtes Mischungsverhältnis der zwei Komponenten $K_1$ und $K_2$ ermittelt, um ein Medium 6 mit einem aus dem erwünschten Mischungsverhältnis resultierenden Brechungsindex $n_{res}$ zu erhalten. Der resultierende Brechungsindex $n_{res}$ kann vorab berechnet werden, da die Brechungsindizes $n_1$ und $n_2$ der Komponenten $K_1$ und $K_2$ bekannt sind und deren jeweiliger Anteil am Medium 6 durch die Ansteuerung der Pumpen 3 eingestellt wird.

In weiteren möglichen Ausgestaltungen des Verfahrens sowie in weiteren Ausführungen einer erfindungsgemäßen Anordnung ist die Auswerteeinheit 17 dazu konfiguriert, um anhand erfasster Bilddaten aktuelle Bildgüteparameter zu ermitteln und diese durch Variation des Mischungsverhältnisses der mindestens zwei Komponenten $K_1$ und $K_2$ zu maximieren, um ein Medium 6 mit einem resultierenden Brechungsindex $n_{res}$ zu erhalten, das bestmöglich an eine Probe 14 angepasst ist.

Entsprechend dem ermittelten erwünschten Mischungsverhältnis werden in der Steuereinheit 18 Steuerbefehle für jede der Pumpen 3 generiert und diese entsprechend angesteuert. Die Pumpen fördern entsprechend des erwünschten Mischungsverhältnisses Volumina der Komponenten $K_1$ und $K_2$ in die Mischvorrichtung 2, in der diese miteinander vermischt werden und das Medium 6 in dem erwünschten Mischungsverhältnis erzeugt und bereitgestellt wird. Die Mischvorrichtung 2 wird ebenfalls durch die Steuereinheit 18 angesteuert.

Während des Mischens kann mittels geeigneter Sensoren der Mischvorgang überwacht werden. Es ist dabei möglich, die Ansteuerung der Mischvorrichtung 2 und/oder der Pumpen 3 zu ändern, wenn die Messwerte der Sensoren eine Regelung erforderlich werden lassen. Vorzugsweise erfolgt diese Regelung als Feedback-Regelung. Diese Überwachung kann beispielsweise mit einem Refraktometer erfolgen, das die Mischung nach der Mischvorrichtung 2 analysiert.

Dieses Medium 6 mit dem resultierenden Brechungsindex $n_{res}$ wird in den Kontaktbereich 7 gefördert, beispielsweise gepumpt. Eventuell bereits dort befindliches Medium 6 wird vollständig oder anteilig verdrängt.

Anschließend kann die Erfassung von Bilddaten und der Vergleich der aktuellen Bildparameter mit den Soll-Bildparametern erneut ausgeführt werden, um die korrekte Einstellung des resultierenden Brechungsindex $n_{res}$ zu überprüfen.

Es ist auch möglich, dass im Ergebnis einer erneuten Erfassung von Bilddaten und Auswertung der aktuellen Bildparameter ein anderes als das ursprünglich erwünschte Mischungsverhältnis gewählt und als gewünschtes Mischungsverhältnis eingestellt wird. Beispielsweise können sich verändernde Umgebungstemperaturen, schwankender Luftdruck, Abweichungen des Brechungsindex der Probe 14 von einem erwarteten Brechungsindex und andere systematisch bedingte Fehler die Wahl eines anderen Mischungsverhältnisses erforderlich machen, als dies aufgrund theoretischer Überlegungen und/oder empirischer Daten gewählt worden wäre oder als Startwert gewählt worden ist.

Bei einer gleichzeitigen Beobachtung der Probe 14 und Auswertung geeigneter Bildparameter können Aberrationen minimiert werden und so der Brechungsindex $n_{res}$ des Mediums 6 angepasst werden.

Als Bildparameter können insbesondere Bildgütekriterien ausgewertet werden.

Da insbesondere Optiken mit schiefem Durchgang durch die Probenhalterung 11, beispielsweise durch ein Deckglas, selbst bei optimal eingestellter (Deckglas-)dickenkorrektur starke Aberrationen bei Abweichung des Brechungsindex der Probe 14 vom Brechungsindex $n_{res}$ des Mediums 6 aufweisen, kann eine Auswertung der Bilddaten nach Bildgütekriterien erfolgen. Das gilt für alle Immersionsobjektive.

Dabei wird das Mischungsverhältnis der Komponenten $K_1$ und $K_2$ variiert, um ein gewähltes Bildgütekriterium zu maximieren. Das kann wie oben beschrieben durch Auswahl eines resultierenden Brechungsindex $n_{res}$ und Einstellen eines entsprechenden erwünschten Mischungsverhältnisses erfolgen. Es ist auch möglich, dass sich iterativ einem maximierten Bildgütekriterium angenähert wird, indem das Mischungsverhältnis in kleinen Schritten geändert und die Wirkungen der jeweiligen resultierenden Brechungsindizes $n_{res}$ erfasst und bewertet werden. Wird ein Maximum des Bildgütekriteriums festgestellt, wird das entsprechende Mischungsverhältnis beibehalten. Das gefundene Mischungsverhältnis und/oder erfasste Zwischenwerte können gespeichert und bei nachfolgenden Anpassungen genutzt werden.

Die Auswertung kann automatisiert erfolgen; dazu müssen die auszuwertenden Bildgütekriterien objektiv bestimmbar sein. Es gibt verschiedenste Bildgüteparameter, die in der Bildverarbeitung Verwendung finden; sie lassen sich in den folgenden Klassen zusammenfassen:

- statistische Parameter, die auf das Histogramm der Pixelintensitäten eines Bildes zurückgeführt werden,

- korrelative Bildgüteparameter, die die Autokorrelation des Bildes auswerten sowie

- spektrale Bildgüteparameter, die das Fourier-Spektrum des Bildes auswerten.

Welcher oder welche Bildgüteparameter am besten geeignet ist beziehungsweise sind, kann von der Probe und der Abbildungsmethode abhängen. Im Folgenden werden lediglich exemplarisch einige Bildgüteparameter vorgestellt.

Der Kontrast eines einzelnen, isolierten Objekts vor einem gleichmäßigen Hintergrund definiert sich über

$$C = \cdot S / S´ ,$$

wobei $\cdot S$ die Zu- oder Abnahme des Signals über dem (gleichmäßigen) Hintergrundsignal $S$ ist. Diese Definition ist allerdings für die automatisierte Bestimmung eines lokalen Bildkontrasts einer beliebigen und a priori nicht bekannten Probe nicht geeignet. Besser dafür geeignet sind Kontrast-Definitionen, die den Kontrast in jedem Bildpunkt des Bildes oder der ROI (Region of Interest) berechnen. Zusätzlich werden nur bestimmte Raumfrequenzbereiche im Fourier-Transformierten Bild betrachtet, wodurch Signal, Hintergrund und Rauschen besser isoliert werden können (Peli, Eli., (1990), Contrast in complex images, JOSA A 7.10: 2032-2040).

Der Kontrast in jedem Bildpunkt und je Frequenzband $k$ ergibt sich also zu

$$c_k(x, y) = (B_k (x, y))/ \cdot \vdots \cdots ,$$

wobei ($B_k (x, y)$ das Bandpass-gefilterte Bild des Frequenzbands $k$ ist und $\cdot \vdots \cdots$ die Energie unterhalb dieses Frequenzbands enthält. Die Grenzen können anhand von typischen Mikroskopie-Bildern im Fourier-Raum geeignet gesetzt werden, so dass dann beispielsweise über den Mittelwert der $c_k (x, y)$ innerhalb des Bildes oder der ROI eine Metrik zur Verfügung steht, die sich durch anpassen des Brechungsindex der Immersion maximieren lässt.

Auch ein Schärfemaß kann aus einem Bild im Ortsfrequenzraum abgeleitet werden (z.B. De, Kanjar, & V. Masilamani, (2013), Image sharpness measure for blurred images in frequency domain, Procedia Engineering 64: 149-158.). Es wird eine Schwelle festgelegt und ermittelt, wie viele Raumfrequenzkomponenten im Bild oberhalb dieser Schwelle zu finden sind. Bei dem "schärfsten" Bild ist dieser Anteil, der als Maßzahl dienen kann, maximal. Eine andere Möglichkeit besteht in der Auswertung der Wölbung (Kurtosis), also des 4. Zentralen Moments des Ortsfrequenzspektrums. In Zhang, Nien Fan, et al. (1999) (Zhang, Nien Fan, et al. (1999), Image sharpness measurement in the scanning electron microscope- Part III., Scanning 21.4: 246-252) wurde beispielsweise gezeigt, dass eine niedrige Kurtosis mit einer hohen Schärfe korreliert. Weitere mögliche Bildgüteparameter sind SNR (Signal zu Hintergrund-Verhältnis) und die Intensität des Signals.

Ergänzend oder alternativ können in der Steuereinheit 18 Steuerbefehle generiert werden, mit denen ein Objektiv 10, 10DB angesteuert und entsprechend einer Korrekturfunktion des Objektivs 10, 10DB dessen aktuelle optische Parameter angepasst werden. Eine solche Anpassung dient insbesondere dem Ausgleich von Aberrationen, die aufgrund schwankender Dicken der Probenhalterung 11 auftreten können.

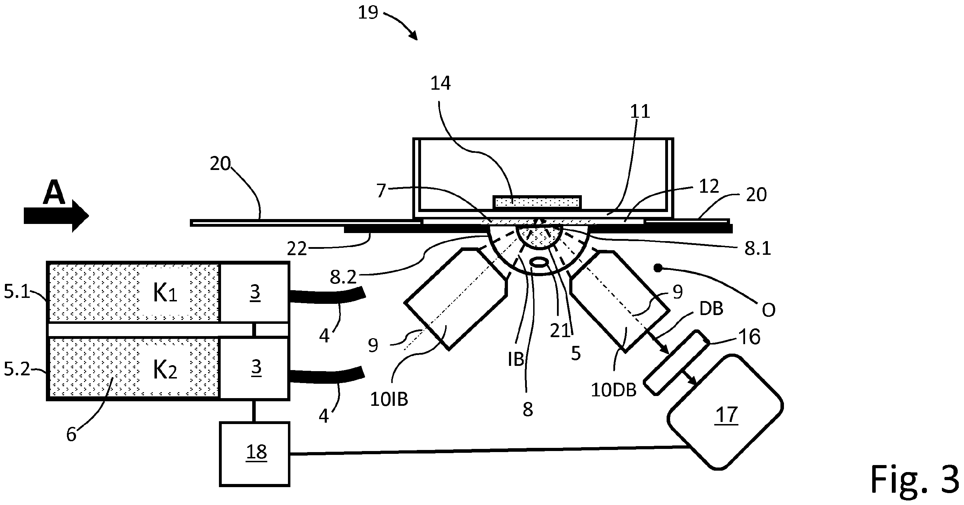

Ein weiteres Ausführungsbeispiel der Erfindung ist schematisch in Fig. 3 gezeigt. Die Anordnung ist Bestandteil eines nicht näher dargestellten Mikroskops 19. Die optische Linse 8 ist in Form einer Meniskuslinse ausgebildet und einem Tisch 20, vorteilhaft einem gesteuert verfahrbaren Tisch 20, zugeordnet. Die optische Linse 8 ist von einem Schutzelement 22 in Form einer horizontal angeordneten Membran gegen einen Optikraum O, in dem ein Beleuchtungsobjektiv 10IB zur Beleuchtung der Probe 14 und ein Detektionsobjektiv 10DB zur Erfassung von Detektionsstrahlung DB (detection beam) angeordnet sind und in den sich die optische Linse 8 hinein wölbt, abgedichtet.

Auf dem Tisch 20 ist eine Petrischale als ein Probenträger 11 vorhanden, auf dessen Boden eine Probe 14 platziert ist. Dieser Boden wird durch ein hinsichtlich seiner Dicke und Brechzahl definiertem Deckglas gebildet.

Das Beleuchtungsobjektiv 10IB und das Detektionsobjektiv 10DB, und somit deren optische Achsen 9, sind jeweils gegenüber einer als Bezugsachse gezeigten vertikalen Achse (unterbrochene Volllinie) unter einem Winkel von beispielsweise 45° geneigt und in einen gemeinsamen Punkt der Probe 14 gerichtet. Beide Objektivachsen 9 stehen dabei orthogonal zueinander. Die optische Linse 8 befindet sich in den Strahlengängen von Beleuchtungsobjektiv 10IB und Detektionsobjektiv 10DB, was durch die schematische Darstellung einer Beleuchtungsstrahlung IB (illumination beam) und einer Detektionsstrahlung DB (detection beam) mit unterbrochenen Volllinien gezeigt ist.

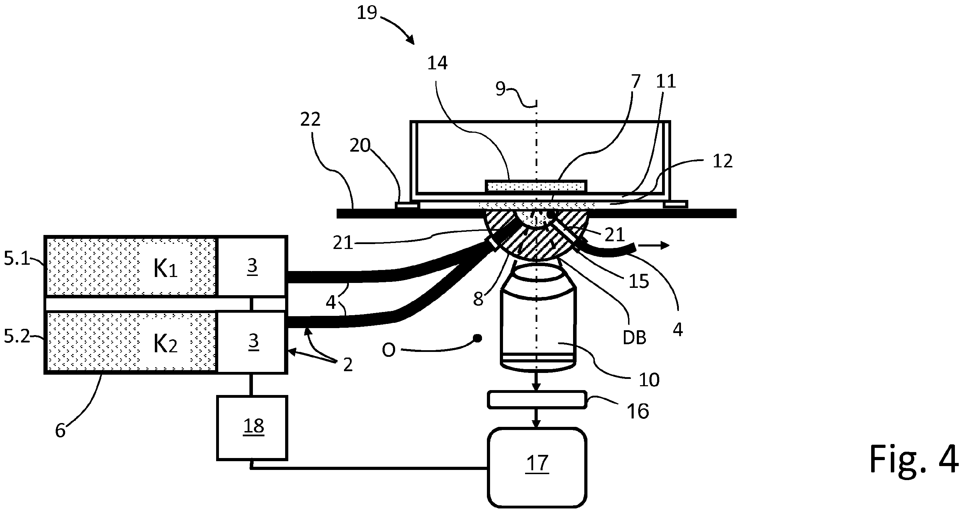

Die optische Linse 8 weist zwei Kanäle 21 auf, von denen in Fig. 3 die für den Anschluss zweier Medienleitungen 4 (siehe Fig. 4) vorgesehene Mündung einer der Kanäle 21 zu sehen ist.

Die Medienleitungen 4 sind jeweils mit einem Vorratsbehälter 5.1 beziehungsweise 5.2 verbunden, in dem die Komponenten $K_1$ beziehungsweise $K_2$ enthalten und mittels je einer Pumpe 3 durch die entsprechende Medienleitung 4 dem Kontaktbereich 7 zuführbar sind. Die Pumpen 3 sind mit einer Steuereinheit 18 verbunden und durch diese ansteuerbar.

Zwischen der optischen Linse 8 und der Unterseite des Probenträgers 11 ist ein Spalt 12 vorhanden. Dieser wird aufgrund auftretender Kapillar- und Adhäsionskräfte mit Medium 6, beispielsweise Immersionsmedium, gefüllt. Der mit Medium 6 gefüllte Kontaktbereich 7, zu dem der Bereich des Spalts 12 unterhalb der Probe 14 gerechnet werden kann, bildet eine optische Verbindung mit geringen oder keinen Brechzahlunterschieden zwischen der optischen Linse 8 und dem Material des Bodens des Probenträgers 11.

Während die Oberflächenspannungen der Komponenten $K_1$ und $K_2$, jedenfalls aber des Mediums 6 bei Ausbildung des Kontaktbereichs 7 als Spalt 12 (siehe Fig. 2) hoch sein sollte, um ein Abfließen des Mediums 6 aus dem Spalt 12 zu vermeiden, können die Oberflächenspannungen bei einem in den Fig. 3 und 4 dargestellten Ausführung des Kontaktbereichs 7 niedriger sein.

Die Anordnung ist in der Fig. 4 in einer zweiten Ansicht gezeigt, wobei die Blickrichtung der Richtung des Pfeils A aus Fig. 3 entspricht. Die Vorratsgefäße 5.1 und 5.2, die Pumpen 3 mit Medienleitungen 4 und die Steuereinheit 18 sind aus der gleichen Perspektive wie in Fig. 3 dargestellt.

In Fig. 4 sind zusätzlich zu Fig. 3 an die optische Linse 8 (geschnitten dargestellt) angeschlossene Medienleitungen 4 gezeigt. Die Medienleitungen 4 sind mittels je eines Anschlusselements 15, z. B. eines Stutzens mit einer Überwurfmutter, an die optische Linse 8 angeschlossen. Die optische Linse 8 besitzt eine der Probe 14 zugewandte erste Linsenfläche 8.1 und eine der Probe 14 abgewandte zweite Linsenfläche 8.2.

Die von den Vorratsbehältern 5.1 und 5.2 kommenden Medienleitungen 4 sind vor der optischen Linse 8 vereinigt und zusätzlich in den Kanal 21 bis zu dessen Mündung eingesteckt. Die andere Medienleitung 4, die zum Ableiten des Mediums 6 aus dem Kontaktbereich 7 dient, ist nur mit dem Anschlusselement 15 angeschlossen und an der optischen Linse 8 gehalten. Die Wandung des Kanals 21 fungiert als Wand der Medienleitung 4.

Um die Anordnung zu betreiben wird in den ersten Vorratsbehälter 5.1 die erste Komponente $K_1$ und in den zweiten Vorratsbehälter 5.2 die zweite Komponente $K_2$ des Mediums 6 eingefüllt.

Die Auswahl der Komponenten $K_1$ und $K_2$ erfolgt beispielsweise in Abhängigkeit der Eigenschaften der Materialien der optischen Linse 8, der Probenhalterung 11 und/oder der Probe 14 beziehungsweise eines Einbettungsmediums der Probe 14 sowie der verwendeten Beleuchtungsstrahlung IB. Außerdem können optische Kennwerte des Beleuchtungsobjektivs 10IB und/oder des Detektionsobjektivs 10DB berücksichtigt werden. Infolge eines Steuerbefehls der Steuereinheit 18 werden mittels der Pumpen 3 die Komponenten $K_1$ und $K_2$ durch die jeweilige Medienleitung 4 in den Kontaktbereich 7 gefördert. Je nach Ansteuerung der Pumpen 3 werden die Komponenten $K_1$ beziehungsweise $K_2$ in bestimmten Volumenströmen gefördert, um das erwünschte Mischungsverhältnis zu erzielen. Dabei können die Anteile der Komponenten $K_1$ und $K_2$ in einem Bereich von 0 bis 100% eingestellt werden.

Infolge der Zusammenführung der Medienleitungen 4 vor der optischen Linse 8 beginnt der Mischvorgang bereits in der Medienleitung 4 zwischen der Zusammenführung und dem Kontaktbereich 7. Die Medienleitungen 4 fungieren im Zusammenwirken mit den Pumpen 3 als Mischvorrichtung 2. Der Kontaktbereich 7 wird mit den bereits leicht vermischten Komponenten $K_1$ und $K_2$ ausgefüllt. Ein eventuell bereits in dem Kontaktbereich 7_vorhandenes Medium 6 wird verdrängt und durch die zugeführten Komponenten $K_1$ und $K_2$ ersetzt. Während des Befüllens des Kontaktbereichs 7 wird der Mischvorgang der Komponenten $K_1$ und $K_2$ abgeschlossen und das Medium 6 mit dem resultierenden Brechungsindex $n_{res}$ erhalten.

Es ist auch möglich, lediglich den Anteil einer der Komponenten $K_1$ oder $K_2$ an dem in dem Kontaktbereich 7 vorhandenen Medium 6 zu ändern, indem lediglich eine bestimmte Menge der betreffenden Komponente $K_1$ oder $K_2$ zugeführt wird. Das Mischen des Mediums 6 mit dem zugeführten Anteil der Komponente $K_1$ beziehungsweise $K_2$ erfolgt passiv in dem Kontaktbereich 7 beispielsweise durch Strömungseffekte und/oder Dichtunterschiede.

Anschließend kann die Probe 14 beobachtet und abgebildet werden, indem mittels des Beleuchtungsobjektivs 10IB die ausgewählte Beleuchtungsstrahlung IB durch einen Nutzbereich der optischen Linse 8, in dem kein Kanal 21 ausgebildet ist, sowie durch das in dem Kontaktbereich 7 befindliche Medium 6 und den Boden der Probenhalterung 11 in die Probe 14 gestrahlt wird. Von der Probe 14 kommende Detektionsstrahlung DB in Form reflektierter Anteile der Beleuchtungsstrahlung IB und/oder mittels der Beleuchtungsstrahlung IB angeregter Strahlungen wie Fluoreszenzstrahlung werden mittels des Detektionsobjektivs 10DB erfasst, der Bilderfassungseinheit 16 zugeleitet und die Bilddaten durch die Auswerteeinheit 17 wie oben beschrieben ausgewertet.

Nach beendeter Probenuntersuchung kann das Medium 6 gegen neues Medium 6 oder gegen ein Spülmedium ausgetauscht werden. Das verbrauchte Medium 6, in diesem Fall das Immersionsmedium, gelangt durch den zweiten Kanal 21 aus dem Kontaktbereich 7 und wird beispielsweise in ein Sammel- oder Abfallreservoir (nicht gezeigt) geleitet.

Es ist auch möglich, dass bereits während der Probenuntersuchung anhand der Bilddaten und der ausgewerteten Bildgüteparameter die Eignung des aktuell vorliegenden Brechungsindex $n_{res}$ des Mediums 6 überwacht und bei Bedarf angepasst wird. Dazu ist bevorzugt eine sogenannte Feedback-Regelung verwendet.

In weiteren Ausführungen der Anordnung werden die Pumpen 3 mittels der Steuereinheit 18 derart angesteuert, dass das Medium 6 in dem Kontaktbereich 7 intervallweise oder permanent ausgetauscht wird. Die Feedback-Regelung wird beispielsweise korrespondierend dazu intervallweise oder permanent ausgeführt.

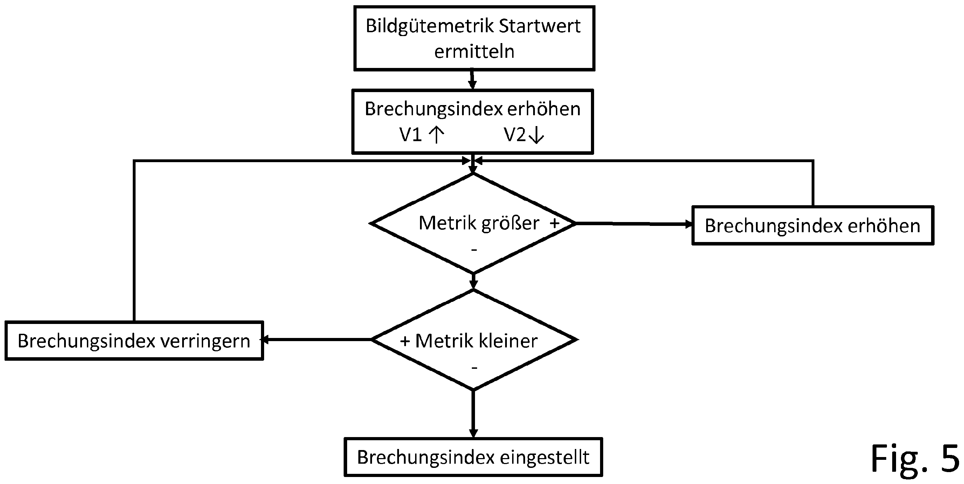

Das oben bereits anhand der Anordnung nach Fig. 2 beschriebene Verfahren ist in Fig. 5 nochmals als Ablaufschema gezeigt. Anhand der bekannten Parameter des verwendeten Mikroskops 19 beziehungsweise von Beleuchtungsobjektiv 10IB, Detektionsobjektiv 10DB, Probenhalterung 11, Probe 14, Einbettungsmedium, Beleuchtungsstrahlung und/oder der Bilderfassungseinheit 16 wird ein Bildgüteparameter (Bildgütemetrik, Metrik) gewählt und als Startwert gesetzt. Nach Auswertung der aktuellen Bildparameter wird durch die Auswerteeinheit 17 festgelegt, ob eine Anpassung des Brechungsindex $n_{res}$ des Mediums 6 erforderlich ist. Sollte eine Anpassung nötig sein, wird das erwünschte Mischungsverhältnis ermittelt, beispielsweise berechnet, bei dem der gewünschte Brechungsindex $n_{res}$ erzielt wird. Die Anteile der Komponenten $K_1$ und $K_2$ an dem Medium 6 werden daraufhin entsprechend geändert (durch die Zeichen V1• und V2•symbolisiert).

Die Ermittlung des Mischungsverhältnisses kann auch iterativ erfolgen. Wird beispielsweise von Wasser als Probenmedium (Probe 14, s.o.) ausgegangen, wird ein entsprechender theoretischer Startwert gewählt. Der resultierende Brechungsindex $n_{res}$ wird davon ausgehend erhöht, da in dieser Richtung am ehesten eine Abweichung des tatsächlichen Brechungsindex zu erwarten ist. Wird aufgrund des angepassten Mischungsverhältnisses ein verbesserter Bildgüteparameter festgestellt, wird das Mischungsverhältnis solange weiter erhöht, bis eine Stagnation oder eine eintretende Abnahme des Bildgüteparameters eintritt. Der resultierende Brechungsindex $n_{res}$ ist eingestellt, wenn das aktuell gewählte Mischungsverhältnis zu einem maximalen Bildgüteparameter führt.

In weiteren Ausgestaltungen des Verfahrens können auch anhand von Simulation und/oder Tabellen demnächst erforderliche Anpassungen des Brechungsindex $n_{res}$ abgeschätzt werden. Die erforderlichen Schritte zur Anpassung des Brechungsindex $n_{res}$ können dann schon eingeleitet werden, bevor es zu einer Abnahme der Bildqualität kommt.

Wird in einem nachfolgenden Auswertungsschritt festgestellt, dass beispielsweise die aktuellen Bildparameter größer als die Soll-Bildparameter sind, kann der Brechungsindex $n_{res}$ erhöht werden. Über eine anschließende erneute Auswertung wird die Wirkung der Anpassung des Brechungsindex $n_{res}$ bewertet und bei Bedarf erneut angepasst, beispielsweise erneut erhöht oder aber reduziert.

Sinnentsprechend wird vorgegangen, wenn die Auswertung zeigt, dass der aktuelle Bildparameter kleiner als der Soll-Bildparameter ist.

Ist keine Abweichung des aktuellen Bildparameters von dem Soll-Bildparameter feststellbar beziehungsweise ist diese Abweichung kleiner als eine vorbestimmte zulässige Abweichung, ist die Einstellung des Brechungsindex $n_{res}$ abgeschlossen. Optional kann in regelmäßigen Intervallen und/oder beim Auftreten einer Veränderung der Betriebsbedingungen, beispielsweise bei Änderungen von Temperaturen, Druckverhältnissen etc., eine erneute Auswertung aktueller Bildparameter vorgenommen werden.

Eine Kombination der Einstellung des Brechungsindex $n_{res}$ mit einer Regelung eines entsprechend ausgestalteten Objektivs 10, 10DB anhand einer Korrekturfunktion ist mit allen vorgenannten Ausgestaltungen des erfindungsgemäßen Verfahrens möglich.

Bezugzeichen

| | |
|---|---|
| 1 | Medienzuführeinheit |
| 2 | Mischvorrichtung |
| 3 | Pumpe |
| 4 | Medienleitung |
| 5.1 | erster Vorratsbehälter |
| 5.1 | zweiter Vorratsbehälter |
| 5.3 | dritter Vorratsbehälter |
| 6 | Medium |
| 7 | Kontaktbereich |
| 8 | optische Linse |
| 8.1 | erste Linsenfläche |
| 8.2 | zweite Linsenfläche |
| 9 | optische Achse (Objektiv 10, 10IB, 10DB) |
| 10 | Objektiv |
| 10IB | Beleuchtungsobjektiv |
| 10DB | Detektionsobjektiv |
| 11 | Probenträger |
| 12 | Spalt |
| 13 | Objektraum |
| 14 | Probe |
| 15 | Anschlusselement |
| 16 | Bilderfassungseinheit |
| 17 | Auswerteeinheit |
| 18 | Steuereinheit |
| 19 | Mikroskop |
| 20 | Tisch |
| 21 | Kanal |
| 22 | Schutzelement |
| DB | Detektionsstrahlung |
| IB | Beleuchtungsstrahlung |
| $K_1$ | erste Komponente |
| $K_2$ | zweite Komponente |
| $K_3$ | dritte Komponente |
| $n_1$ | Brechungsindex (der ersten Komponenten $K_1$) |
| $n_2$ | Brechungsindex (der zweiten Komponente $K_2$) |
| $n_3$ | Brechungsindex (der dritten Komponente $K_3$) |
| $n_{res}$ | resultierender Brechungsindex (des Mediums 6) |
| O | Optikraum |

Patentansprüche

1. Anordnung zur Zuführung von als Immersionsmedien dienenden Medien (6) umfassend:

- eine Medienzuführeinheit (1) zum gesteuerten Zuführen eines Mediums (6) oder eines Gemisches in einen Kontaktbereich (7) zwischen einer optischen Linse (8) und einem Probenträger (11), auf dem in einem Objektraum (13) eine Probe (14) angeordnet oder anordenbar ist,
- eine Bilderfassungseinheit (16) zur Erfassung von Bilddaten anhand von aus dem Objektraum (13) entlang eines durch den Kontaktbereich (7) verlaufenden Detektionsstrahlengangs erhaltener Detektionsstrahlung (DB), **dadurch gekennzeichnet, dass**
- eine Auswerteeinheit (17) vorhanden ist, die konfiguriert ist, um anhand erfasster Bilddaten aktuelle Bildparameter zu ermitteln, diese mit Soll-Bildparametern zu vergleichen und in Abhängigkeit des Vergleichs ein erwünschtes Mischungsverhältnis wenigstens zweier Komponenten (K1, K2) des Mediums (6) zu ermitteln,
- eine Mischvorrichtung (2) zur gesteuerten Einstellung des Mischungsverhältnisses der Komponenten (K1, K2) des in den Kontaktbereich (7) einzubringenden Mediums (6) vorhanden ist, und,
- eine Steuereinheit (18), die zur Ansteuerung der Mischvorrichtung (2) in Abhängigkeit des ermittelten erwünschten Mischungsverhältnisses ausgebildet ist.

2. Anordnung nach Anspruch 1, wobei die Mischvorrichtung (2) ein Sägezahnmischer, ein Dean-Flow-Mischer oder eine Mischstrecke ist.

3. Anordnung nach einem der Ansprüche 1 oder 2, umfassend eine optische Linse (8), die eine erste Linsenfläche (8.1) und eine zweite Linsenfläche (8.2) aufweist, wobei die erste Linsenfläche (8.1) der zu beobachtenden Probe (14) zugewandt und die zweite Linsenfläche (8.2) der zu beobachtenden Probe 14 abgewandt sind, die optische Linse (8) mindestens einen an dem Kontaktbereich (7) mündenden Kanal (21) aufweist, und der Kanal (21) durch die optische Linse (8) verläuft.

4. Verfahren zur Einstellung optischer Parameter eines als Immersionsmedium fungierenden Mediums (6), mit den Schritten:

- Erfassen von Bilddaten einer in einem Objektraum (13) angeordneten Probe (14) entlang eines Detektionsstrahlengangs, wobei der Detektionsstrahlengang über einen Abschnitts seiner Länge das Medium (6) durchläuft,
- Auswerten der erfassten Bilddaten und Ermitteln aktueller Bildparameter,
- Vergleichen der aktuellen Bildparameter mit Soll-Bildparametern und Ermitteln eines erwünschten Mischungsverhältnisses wenigstens zweier Komponenten (K1, K2) des Mediums (6) in Abhängigkeit des Vergleichs, und
- Generieren von Steuerbefehlen und Ansteuerung einer Mischvorrichtung (2) zur Erzeugung des erwünschten Mischungsverhältnisses in einem Kontaktbereich (7) zwischen einer im Detektionsstrahlengang angeordneten optischen Linse (8) und einem Probenträger (11), auf dem in dem Objektraum (13) eine Probe (14) angeordnet ist, und/oder zur Erzeugung des erwünschten Mischungsverhältnisses und Zuführen des Mediums (6) in den Kontaktbereich (7).

5. Verfahren nach Anspruch 4, wobei als Soll-Bildparameter iterativ ein Maximum eines Bildgüteparameters ermittelt wird.

6. Verfahren nach Anspruch 4 oder 5, wobei das Mischungsverhältnis so eingestellt wird, dass ein resultierender Brechungsindex ($n_{res}$) des Mediums (6) an einen Brechungsindex ($n_{res}$) der Probe (14) angepasst wird.

7. Verfahren nach Anspruch 6, wobei der Brechungsindex ($n_{res}$) des Mediums (6) aus einem Bereich von $n_{res}$ = 1,36 - 1,42, insbesondere aus einem Bereich von $n_{res}$ = 1,36 - 1,40, ausgewählt wird.

8. Verfahren nach einem der Ansprüche 4 bis 7, wobei die Bildgüteparameter Bildschärfe, Bildkontrast, ein Signal-Rausch-Verhältnis und/oder Signalintensitäten als Bildparameter verwendet werden.

9. Verfahren nach einem der Ansprüche 4 bis 8, wobei in Abhängigkeit der Ergebnisse des Vergleichs der aktuellen Bildparameter mit Soll-Bildparametern Steuerbefehle generiert werden und mit diesen Steuerbefehlen eine Korrekturfunktion eines im Detektionsstrahlengang angeordneten Objektivs (10, 10DB) eingestellt wird.

**Claims**

1. Arrangement for supplying media (6) that serve as immersion media, said arrangement comprising:

- a media supply unit (1) for the controlled supply of a medium (6) or of a mixture into a contact region (7) between an optical lens (8) and a specimen slide (11), on which a specimen (14) is arranged or arrangeable in an object space (13),
- an image capture unit (16) for capturing image data on the basis of detection radiation (DB) obtained from the object space (13) along a detection beam path extending through the contact region (7), **characterized in that**
- an evaluation unit (17) is present, said evaluation unit being configured to establish current image parameters on the basis of captured image data, to compare said current image parameters to intended image parameters and to establish a desired mixing ratio of at least two components (K1, K2) of the medium (6) depending on the comparison,

- a mixing apparatus (2) is present for the controlled setting of the mixing ratio of the components (K1, K2) of the medium (6) to be introduced into the contact region (7) and

- a control unit (18), which is embodied to actuate the mixing apparatus (2) depending on the established desired mixing ratio.

2. Arrangement according to Claim 1, wherein the mixing apparatus (2) is a sawtooth mixer, a Dean flow mixer or a mixing line.

3. Arrangement according to either of Claims 1 and 2, comprising an optical lens (8) which comprises a first lens surface (8.1) and a second lens surface (8.2), wherein the first lens surface (8.1) faces the specimen (14) to be observed and the second lens surface (8.2) faces away from the specimen 14 to be observed, the optical lens (8) has at least one channel (21) opening at the contact region (7), and the channel (21) extends through the optical lens (8).

4. Method for setting optical parameters of a medium (6) acting as an immersion medium, said method including the steps of:

- capturing image data of a specimen (14), arranged in an object space (13), along a detection beam path, wherein the detection beam path passes through the medium (6) over a portion of its length,

- evaluating the captured image data and establishing current image parameters,

- comparing the current image parameters with intended image parameters and establishing a desired mixing ratio of at least two components (K1, K2) of the medium (6) depending on the comparison, and

- generating control commands and actuating a mixing apparatus (2) for producing the desired mixing ratio in a contact region (7) between an optical lens (8) arranged in the detection beam path and a specimen slide (11), on which a specimen (14) is arranged in the object space (13), and/or for producing the desired mixing ratio and supplying the medium (6) into the contact region (7).

5. Method according to Claim 4, wherein a maximum of an image quality parameter is established iteratively as intended image parameter.

6. Method according to Claim 4 or 5, wherein the mixing ratio is set in such a way that a resultant refractive

index ($n_{res}$) of the medium (6) is matched to a refractive index ($n_{res}$) of the specimen (14).

7. Method according to Claim 6, wherein the refractive index ($n_{res}$) of the medium (6) is selected from a range of $n_{res}$ = 1.36-1.42, in particular from a range of $n_{res}$ = 1.36-1.40.

8. Method according to any one of Claims 4 to 7, wherein the image quality parameters of image sharpness, image contrast, a signal-to-noise ratio and/or signal intensities are used as image parameters.

9. Method according to any one of Claims 4 to 8, wherein control commands are generated depending on the results of the comparison of the current image parameters with intended image parameters and a correction function of an objective (10, 10DB) arranged in the detection beam path is set using these control commands.

**Revendications**

1. Ensemble destiné à amener des milieux (6) servant de milieux d'immersion, ledit ensemble comprenant :

- une unité d'alimentation en milieux (1) destiné à amener de manière commandée un milieu (6) ou un mélange jusque dans une zone de contact (7) située entre une lentille optique (8) et un porte-échantillon (11) sur lequel un échantillon (14) est ou peut être disposé dans un espace objet (13),

- une unité d'acquisition d'images (16) destinée à acquérir des données d'image sur la base du rayonnement de détection (DB) obtenu à partir de l'espace objet (13) le long d'un trajet de faisceau de détection s'étendant à travers la zone de contact (7), **caractérisé en ce que**

- une unité d'évaluation (17) est prévue qui est configurée pour déterminer des paramètres d'image actuels sur la base de données d'image acquises, pour les comparer à des paramètres d'image cibles et pour déterminer, en fonction de la comparaison, un rapport de mélange souhaité d'au moins deux composants (K1, K2) du milieu (6),

- un dispositif de mélange (2) est prévu pour régler de manière commandé le rapport de mélange des composants (K1, K2) du milieu (6) à introduire dans la zone de contact (7) et

- une unité de commande (18) qui est conçue pour commander le dispositif de mélange (2) en fonction du rapport de mélange souhaité déterminé.

**2.** Ensemble selon la revendication 1, le dispositif de mélange (2) étant un mélangeur à dents de scie, un mélangeur Dean Flow ou une section de mélange.

**3.** Ensemble selon l'une des revendications 1 ou 2, comprenant une lentille optique (8) qui comporte une première surface de lentille (8.1) et une deuxième surface de lentille (8.2),

la première surface de lentille (8.1) étant dirigée vers l'échantillon (14) à observer et la deuxième surface de lentille (8.2) étant dirigée à l'opposé de l'échantillon (14) à observer,
la lentille optique (8) comportant au moins un canal (21) qui débouche au niveau de la zone de contact (7) et le canal (21) s'étendant à travers la lentille optique (8).

**4.** Procédé de réglage de paramètres optiques d'un milieu (6) servant de milieu d'immersion, ledit procédé comprenant les étapes suivantes :

- acquérir des données d'image d'un échantillon (14), disposé dans un espace objet (13), le long d'un trajet de faisceau de détection, le trajet de faisceau de détection traversant le milieu (6) sur une partie de sa longueur,
- évaluer les données d'image acquises et déterminer des paramètres d'image actuels,
- comparer les paramètres d'image actuels à des paramètres d'image cibles et déterminer un rapport de mélange souhaité d'au moins deux composants (K1, K2) du milieu (6) en fonction de la comparaison, et
- générer des instructions de commandes et activer un dispositif de mélange (2) afin de générer le rapport de mélange souhaité dans une zone de contact (7) située entre une lentille optique (8), disposée dans le trajet de faisceau de détection, et un porte-échantillon (11) sur lequel un échantillon (14) est disposé dans l'espace objet (13), et/ou afin de générer le rapport de mélange souhaité et amener le milieu (6) jusque dans la zone de contact (7).

**5.** Procédé selon la revendication 4, un maximum d'un paramètre de qualité d'image étant déterminé de manière itérative comme paramètre d'image cible.

**6.** Procédé selon la revendication 4 ou 5, le rapport de mélange étant régler de façon à adapter un indice de réfraction résultant ($n_{res}$) du milieu (6) à un indice de réfraction ($n_{res}$) de l'échantillon (14).

**7.** Procédé selon la revendication 6, l'indice de réfraction ($n_{res}$) du milieu (6) étant sélectionné dans une plage de $n_{res}$ = 1,36-1,42, en particulier dans une plage de $n_{res}$ = 1,36-1,40.

**8.** Procédé selon l'une des revendications 4 à 7, les paramètres de qualité d'image netteté d'image, contraste d'image, rapport signal sur bruit et/ou intensités de signal étant utilisés comme paramètres d'image.

**9.** Procédé selon l'une des revendications 4 à 8, des instructions de commande étant générées en fonction des résultats de la comparaison des paramètres d'image actuels aux paramètres d'image cibles, et une fonction de correction d'un objectif (10, 10DB), disposé dans le trajet de faisceau de détection, étant réglée avec ces instructions de commande.

Fig. 1a  Fig. 1b  Fig. 1c

EP 3 462 225 B1

Fig. 2

Fig. 3

EP 3 462 225 B1

Fig. 4

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015221044 A1
- US 20080117392 A1


**In der Beschreibung aufgeführte Nicht-Patentliteratur**

- **LIU, P. Y. et al.** Cell refractive index for cell biology and disease diagnosis: past, present and future. *Lab on a Chip,* 2016, vol. 16 (4), 634-644
- **HELL, S. et al.** Aberrations in confocal fluorescence microscopy induced by mismatches in refractive index. *Journal of microscopy,* 1993, vol. 169, 391-405
- **HERRAEZ, J.V. ; BELDA, R.** Refractive indices, densities and excess molar volumes of monoalcohols+ water. *Journal of solution chemistry,* 2006, vol. 35, 1315-1328
- **PELI, ELI.** Contrast in complex images. *JOSA A,* 1990, vol. 7 (10), 2032-2040
- **DE, KANJAR ; V. MASILAMANI.** Image sharpness measure for blurred images in frequency domain. *Procedia Engineering,* 2013, vol. 64, 149-158
- **ZHANG, NIEN FAN et al.** Image sharpness measurement in the scanning electron microscope- Part III. *Scanning,* 1999, vol. 21 (4), 246-252